# EUROPÄISCHE PATENTSCHRIFT

(11) **EP 2 711 092 B1**
(45) Veröffentlichungstag und Bekanntmachung des Hinweises auf die Patenterteilung: **19.04.2017**
(21) Anmeldenummer: 13183512.6
(22) Anmeldetag: 09.09.2013
(51) Int. Cl.: B29C 65/00, B06B 1/02

(54) **Transformatorfreier Ultraschall-Generator für ein Handgerät**
Transformer-free ultrasound generator for a handheld device
Générateur d'ultrasons sans transformateur pour un appareil manuel

(30) Priorität: 25.09.2012 DE 102012109035
(43) Veröffentlichungstag der Anmeldung: 26.03.2014
(73) Patentinhaber: Adolf Würth GmbH & Co. KG, 74653 Künzelsau (DE); Würth International AG, 7000 Chur (CH)
(72) Erfinder: Beerstecher, Lutz, 1277 Borex (CH); Rehrmann, Jörg, 34379 Calden (DE)
(74) Vertreter: Dilg, Haeusler, Schindelmann Patentanwaltsgesellschaft mbH

(56) Entgegenhaltungen:
- WO-A1-2009/052644
- CN-A- 102 364 336
- CN-Y- 201 304 720
- DE-A1- 4 233 318
- DE-A1- 10 250 213
- JP-A- H11 347 030
- US-A- 3 947 751
- US-A1- 2004 256 952
- US-A1- 2005 007 879
- US-A1- 2005 240 127
- US-A1- 2006 001 332
- US-A1- 2006 152 112
- US-A1- 2007 046 143
- US-A1- 2011 285 244
- US-A1- 2012 078 278

## Beschreibung

Die Erfindung betrifft einen Ultraschall-Generator für ein Handgerät, ein Handgerät, eine Verwendung und ein Verfahren zum Erzeugen von Ultraschall für ein Handgerät.

Bei der sogenannten WoodWelding®-Technologie kann ein Dübel oder dergleichen an porösen Materialien wie Knochen oder Holz in einem auf Ultraschall-Verbindungstechnik basierenden Verfahren dauerhaft fixiert werden. Dabei werden mit Ultraschallenergie Dübel oder dergleichen aus thermoplastischem Kunststoffen kurzzeitig verflüssigt und in die Poren und Hohlräume von porösem Material eingebracht. Nach Abkühlung verbleibt der Dübel oder dergleichen in dem porösen Untergrund festgeschweißt.

WO 2009/052644 offenbart ein entsprechendes Verfahren und Gerät zum Verankern eines Dübels unter Verwendung von mechanischen Vibrationen.

US 2011/285244 A1 offenbart eine Ultraschallwellen erzeugende Vorrichtung mit einem Ultraschallwellen-Generator und einer Ultraschall-Sonde, die einen Transducer aufweist und über eine Übertragungsleitung mit dem Generator verbunden oder in einem gemeinsamen Gehäuse mit diesem aufgenommen ist. Der Ultraschallwellen-Generator ist tragbar und umfasst eine Stromversorgung, einen Leistungverteilungs- und Steuerungsschaltkreis, einen Zeitsteuerungsschaltkreis und einen Treiber-Schaltkreis. Der Generator ist für eine Vielzahl von Verwendungen, einschließlich akustisches Schweißen geeignet. Der Treiber-Schaltkreis umfasst mindestens ein MOSFET Transistor-Paar, das zugeordnete erste und zweite Klemmenspannungsanschlüsse respektive aufweist, die auf eine erste und eine zweite Klemmenspannung von +50V und - 50V, respektive, vorgespannt ist. Der Treiber-Schaltkreis ist dazu ausgebildet, ein Treibersignal auf einer Frequenz, die der Resonanzfrequenz des Ultraschall-Transducers entspricht, auszugeben.

Dokument US2005/0240127A1 offenbart einen transformatorfreien Ultraschall-Generator zum Erzeugen von Ultraschall, wobei der Ultraschall-Generator aufweist einen Leistungsverstärker zum Erzeugen eines gepulsten, digitalen Treibersignal, einen Pulsgenerator zum Erzeugen eines gepulsten Steuersignals zum gepulsten Steuern des Leistungsverstärkers, einen Ultraschall-Transducer zum Erzeugen des Ultraschalls bei Bereitstellen des Treibersignals an den Ultraschall-Transducer; und ein zwischen dem Leistungsverstärker und dem Ultraschall-Transducer verschaltetes Tiefpassfilter.

Weiterer Stand der Technik ist in US 4 868 445, DE 10 2009 048 779, US 6 819 027, EP 1 079 509, US 2006/152112 A1, DE 102 50 213 A1, JPH11347030 und US 2007/046143 A1 offenbart.

Herkömmliche Schaltkreise zum Erzeugen von Ultraschall für derartige und andere Anwendungen sind häufig aufwendig und führen zu einem großen Platzbedarf.

Es ist eine Aufgabe der vorliegenden Erfindung, einen Ultraschall-Generator für ein Handgerät bereitzustellen, der mit geringem Platzbedarf wirksam Ultraschall erzeugen kann.

Diese Aufgabe wird durch die Gegenstände mit den Merkmalen gemäß den unabhängigen Patentansprüchen 1 und 17 gelöst. Weitere Ausführungsbeispiele sind in den abhängigen Ansprüchen gezeigt.

Gemäß einem Ausführungsbeispiel der vorliegenden Erfindung ist ein (zum Beispiel, aber nicht zwingend transformatorfreier) Ultraschall-Generator zum Erzeugen von Ultraschall (insbesondere für ein Handgerät zum Befestigen eines Körpers an einem Untergrund mittels Ultraschallschweißens) bereitgestellt, wobei der Ultraschall-Generator einen Leistungsverstärker zum Verstärken eines elektrischen Versorgungssignals, einen Pulsgenerator zum Erzeugen eines gepulsten Steuersignals zum gepulsten Steuern des Leistungsverstärkers derart, dass der Leistungsverstärker als verstärktes elektrisches Versorgungssignal ein gepulstes Treibersignal zum Treiben eines Ultraschall-Transducers erzeugt, und den Ultraschall-Transducer zum Erzeugen des Ultraschalls bei Bereitstellen des Treibersignals an den Ultraschall-Transducer aufweist. Der Ultraschall-Generator ist sowohl versorgungssignalseitig als auch transducerseitig frei von einem Transformator. Erfindungsgemäß umfasst der Ultraschall-Generator eine Leistungsfaktorkorrektureinrichtung, die zum Gleichrichten und zum Aufwärtswandeln des elektrischen Versorgungssignals eingerichtet und zwischen eine Einrichtung zum Bereitstellen des elektrischen Versorgungssignals und den Leistungsverstärker geschaltet ist. Unter einer Leistungsfaktorkorrektureinrichtung (Power-Factor-Correction, PFC), die aktiv oder passiv ausgeführt werden kann, ist eine elektronische Schaltung zu verstehen, die den Leistungsfaktor in einem bestimmten, gewünschten Bereich hält. Unter dem Leistungsfaktor wird das Verhältnis vom Betrag der Wirkleistung zur Scheinleistung verstanden. Die Leistungsfaktorkorrektureinrichtung ist zwischen die elektrische Versorgungseinrichtung (zum Beispiel ein elektrisches Stromnetz oder ein Akkumulator) einerseits und den Leistungsverstärker (zum Beispiel eine digitale Endstufe) andererseits verschaltet. Eine solche Leistungsfaktorkorrektureinrichtung kann zur Unterdrückung (zum Beispiel hochfrequenter) Störungen oder/oder zur Begrenzung des Ladestroms und/oder zum Gleichrichten dienen.

Gemäß einem anderen Ausführungsbeispiel der vorliegenden Erfindung ist ein (zum Beispiel, aber nicht zwingend transformatorfreies) Handgerät zum Befestigen eines Körpers an einem Untergrund mittels Ultraschallschweißens geschaffen, wobei das Handgerät einen Befestigungsabschnitt zum vorübergehenden oder abnehmbaren Befestigen des Körpers an dem Handgerät während des Ultraschallschweißens und einen Ultraschall-Generator mit den oben beschriebenen Merkmalen zum Erzeugen von Ultraschall und zum Beaufschlagen des an dem Befestigungsabschnitt befestigten Körpers mit dem Ultraschall aufweist, um den Körper mittels des Ultraschalls an dem Untergrund zu verschweißen.

Gemäß noch einem anderen Ausführungsbeispiel der vorliegenden Erfindung wird ein Handgerät mit den oben beschriebenen Merkmalen oder ein Ultraschall-Generator mit den oben beschriebenen Merkmalen zum Befestigen eines Dübels (als der Körper) an einem Holzuntergrund (als der Untergrund) mittels ultraschallinduzierten Aufschmelzens des Dübels und mittels (insbesondere nachfolgenden) Verfestigens des aufgeschmolzenen Dübels nach Abschalten des Ultraschalls verwendet.

Gemäß noch einem anderen Ausführungsbeispiel der vorliegenden Erfindung ist ein Verfahren zum (zum Beispiel, aber nicht zwingend transformatorfreien) Erzeugen von Ultraschall, insbesondere für ein Handgerät zum Befestigen eines Körpers an einem Untergrund mittels Ultraschallschweißens bereitgestellt, wobei bei dem Verfahren ein elektrisches Versorgungssignal mittels eines Leistungsverstärkers verstärkt wird, ein gepulstes Steuersignal zum gepulsten Steuern des Leistungsverstärkers mittels eines Pulsgenerators derart erzeugt wird, dass der Leistungsverstärker als verstärktes elektrisches Versorgungssignal ein gepulstes Treibersignal zum Treiben eines Ultraschall-Transducers erzeugt, und der Ultraschall mittels Bereitstellens des Treibersignals an den Ultraschall-Transducer erzeugt wird.

Gemäß einem exemplarischen Ausführungsbeispiel der Erfindung ist ein Ultraschall-Transducer bereitgestellt, der ohne einen Transformator auskommt. Dadurch können bei hoher Leistungsfähigkeit und Betriebssicherheit des Ultraschall-Generators der Platzbedarf und das Gewicht des Ultraschall-Generators signifikant verringert werden. Insbesondere kann ein herkömmlicher Transformator sowohl auf einer Eingangsseite, an der dem Schaltkreis ein elektrisches Versorgungssignal bereitgestellt ist, als auch an einer Ausgangsseite, an welcher der eigentliche Ultraschall-Transducer verschaltet ist, weggelassen sein. Die Schaltungsarchitektur mit einem Leistungsverstärker, der von einem Pulsgenerator mit einem gepulsten Steuersignal und von einer elektrischen Versorgungsspannungseinheit mit einem elektrischen Versorgungssignal versorgt wird und daraus ein gepulstes Treibersignal für den Transducer generiert, kombiniert einfache elektronische Komponenten in kompakter Bauweise.

Unter einem Transformator wird im Rahmen dieser Anmeldung ein elektronisches Bauelement verstanden, das aus einem magnetischen Kreis - zum Beispiel einem Ferrit- oder Eisenkern -, um den die Leiter zweier (oder zusätzlich weiterer) verschiedener Stromkreise so gewickelt sind, besteht. Der Strom jedes Stromkreises wird mehrfach um den Kern herumgeführt. Legt man an eine dieser Wicklungen, auch Transformator-Spule genannt, eine Wechselspannung an, so stellt sich an der zweiten (und den evtl. weiteren vorhandenen) Wicklung(en) eine Wechselspannung ein, deren Höhe sich (im Leerlauffall) zu der ursprünglichen angelegten Spannung so verhält, wie das Verhältnis der Windungszahlen der entsprechenden Wicklungen zueinander. Derartige Transformatoren, die bei herkömmlichen Ultraschall-Generatoren eingesetzt werden, können bei der erfindungsgemäßen Architektur weggelassen werden, womit eine kompakte Bauweise erreichbar ist.

Im Weiteren werden zusätzliche exemplarische Ausführungsbeispiele des Ultraschall-Generators beschrieben. Diese gelten auch für das Handgerät, die Verwendung und das Verfahren.

Gemäß einem Ausführungsbeispiel kann der Ultraschall-Generator versorgungssignalseitig und transducerseitig von einem Transformator frei sein. Anders ausgedrückt kann sowohl auf der Eingangsseite, das heißt an der elektrischen Schnittstelle zu einer elektrischen Versorgungseinheit, als auch auf der Ausgangsseite, das heißt an dem Ultraschall-Transducer, des Ultraschall-Generators eine Schaltungsarchitektur realisiert sein, die keinen Transformator enthält. Gegenüber herkömmlichen Ultraschallerzeugern sind dank der erfindungsgemäßen Schaltungsarchitektur Transformatoren zur transducerseitigen Impedanzanpassung bzw. zur versorgungsseitigen Sicherheitsisolierung entbehrlich.

Gemäß einem Ausführungsbeispiel kann ein eingangsseitiges Ende des Ultraschall-Generators eine elektronische Schnittstelle zum Anschließen an eine Einrichtung zum Bereitstellen des elektrischen Versorgungssignals bilden, und kann ein ausgangsseitiges Ende des Ultraschall-Generators der Ultraschall-Transducer bilden. An die elektronische Anschlussschnittstelle kann als Einrichtung zum Beispiel ein Stromnetz/eine Steckdose angeschlossen sein. Alternativ kann ein auswechselbarer oder wiederaufladbarer Akkumulator, das heißt eine Batterie, als Einrichtung verwendet werden.

Gemäß einem Ausführungsbeispiel kann der Ultraschall-Transducer eine Sicherheitsisolationseinrichtung aufweisen, mit welcher die elektrischen Isolationseigenschaften des Ultraschall-Generators und somit die Betriebssicherheit sichergestellt werden kann. Diese Sicherheitsisolationseinrichtung kann insbesondere einen, zwei oder mehr elektrisch isolierende Zusatzkörper innerhalb des Ultraschall-Transducers aufweisen. Als Zusatzkörper können zum Beispiel schallharte Isolationsscheiben innerhalb der Anordnung aus einem Piezostack, zwischen einzelnen Piezoelementen des Piezostacks angeordneten Elektrodenschichten und außenseitigen Begrenzungselementen (zum Beispiel aus Metall) eingesetzt werden. Je einer von zwei Zusatzkörpern kann zwischen dem Piezostack und einem jeweiligen der beiden außenseitigen Begrenzungselemente angeordnet sein. Mit einer solchen Sicherheitsisolationseinrichtung können unerwünschte elektronische Störungen, wie zum Beispiel ein Überschlag oder ähnliche Effekte, vermieden werden, selbst wenn der Ultraschall-Transducer mit leistungsstarken Treibersignalen betrieben wird. Gemäß einem bevorzugten Ausführungsbeispiel kann der Ultraschall-Transducer mit zwei Keramikscheiben als elektrisch isolierende Zusatzkörper versehen sein, um trotz Transformatorfreiheit des Ultraschall-Generators ein besonders hohes Maß an Sicherheit zu gewährleisten.

Gemäß einem Ausführungsbeispiel kann der Ultraschall-Generator ein zwischen dem Leistungsverstärker und dem Ultraschall-Transducer verschaltetes Tiefpassfilter zum Herausfiltern hochfrequenter Komponenten aus dem Treibersignal aufweisen. Gemäß einem exemplarischen Ausführungsbeispiel der Erfindung ist bei dem Ultraschall-Generator somit annähernd ausgangsseitig, aber in Signalflussrichtung noch stromaufwärts des Ultraschall-Transducers, ein Tiefpassfilter verschaltet, das Frequenzen unterhalb eines vorgebbaren Schwellwerts durchlässt und Frequenzen oberhalb des Schwellwerts herausfiltert bzw. an einem Passieren des Tiefpassfilters hindert. Damit kann der Ultraschall-Transducer vor hochfrequenten Treibersignalkomponenten (insbesondere vor Oberwellen einer Grundfrequenz des Ultraschall-Transducers) geschützt werden und somit unter besonders günstigen Arbeitsbedingungen betrieben werden. Derart hohen, weit oberhalb seiner Resonanzfrequenz liegenden Anregungssignalen kann der Ultraschall-Transducer nicht adäquat folgen, so dass solche Oberschwingungen nicht zur reproduzierbaren Ausbildung mechanischer Schwingungen im Ultraschallbereich beitragen können, sondern lediglich unnötig Wärme verursachen. Durch das Vorsehen eines Tiefpassfilters zwischen Leistungsverstärker und Ultraschall-Transducer sind Probleme mit Wärmeabfuhr am Ultraschall-Transducer oder das Auftreten von unerwünschten Oberwellen erfindungsgemäß vermieden. Eine starke Erwärmung findet am Ultraschall-Transducer daher ebenso wenig statt wie die Erzeugung von elektromagnetischen Störungen (EMV, elektromagnetische Verträglichkeit). Das Anordnen eines Tiefpassfilters am Ausgang des Leistungsverstärkers stellt schaltungstechnisch eine zwar einfache, aber sehr wirksame Maßnahme dar, die oben beschriebenen technischen Herausforderungen beherrschbar zu machen. Weiterhin wird durch das Tiefpassfilter der Wirkungsgrad der Schaltung deutlich erhöht, da der Oberwellenanteil verlustarm in den Filterkomponenten zwischengespeichert wird und zur Erzeugung eines sinusfömigen Ausgangssignals in der gewünschten Arbeitsfrequenz beiträgt.

Gemäß einem Ausführungsbeispiel kann das Tiefpassfilter direkt bzw. unmittelbar, das heißt ohne Zwischenbauelemente, an einen Ausgang des Leistungsverstärkers angeschlossen sein. Anders ausgedrückt kann die Schnittstelle zwischen Tiefpassfilter und Leistungsverstärker von weiteren elektronischen Komponenten frei sein, so dass eine unmittelbare Ankoppelung des Ausgangs des Leistungsverstärkers an das Tiefpassfilter erfolgt. Dadurch kann die tiefpassfilternde Wirkung des Tiefpassfilters unmittelbar auf den Leistungsverstärker einwirken und darauf angepasst sein. Das Tiefpassfilter ist am Ausgang des vorzugsweise als digitale Leistungsendstufe ausgebildeten Leistungsverstärkers angeordnet und sollte entsprechend der vollen Ausgangsleistung des Ultraschall-Generators ausgelegt sein. Auf diese Weise können die Vorzüge eines Leistungsverstärkers (der insbesondere ein rechteckförmiges Signal ausgeben kann) effektiv genutzt werden und mit der Erzeugung eines sinusförmigen Treibersignals für den Ultraschall-Transducer (zum Beispiel ein piezoelektrisches Element) kombiniert werden. Dadurch ist aufgrund der Verwendbarkeit einer digitalen Endstufe als Leistungsverstärker eine kompakte Bauweise bei hoher Leistung und geringen Verlusten möglich.

Gemäß einem Ausführungsbeispiel kann das Tiefpassfilter zum oberwellenfreien Ansteuern des Ultraschall-Transducers ausgebildet sein. Der Ultraschall-Transducer kann besonders effizient betrieben werden, wenn er auf seiner Resonanzfrequenz anschwingt. Dagegen ist es deutlich weniger effizient, wenn der Ultraschall-Transducer auf ganzzahligen Vielfachen seiner Resonanzfrequenz, das heißt entsprechend seinen Oberwellen betrieben wird. Durch tiefpassfilterndes Unterdrücken von Komponenten des Treibersignals, die solchen Oberwellenfrequenzen entsprechen, ist es möglich, den insbesondere als Piezoelement ausgebildeten Ultraschall-Transducer nur bei seiner Grundschwingung zu betreiben, was zu einer hochenergetischen Emission von Ultraschall ohne störende Beiträge von Oberschwingungen führt.

Gemäß einem Ausführungsbeispiel kann das Tiefpassfilter als LC-Glied aus einer Induktivität und einer Kapazität gebildet sein. Diese Konfiguration des Tiefpassfilters stellt eine schaltungstechnische einfache Maßnahme dar, wobei durch Einstellen der Werte von Induktivität und Kapazität die Durchlasseigenschaften und insbesondere ein Schwellwert zwischen Durchlassen und Wegfiltern des Tiefpassfilters einfach und präzise auf die gewünschten Rahmenbedingungen hin einstellbar ist.

Wie oben erwähnt, ist die Leistungsfaktorkorrektureinrichtung erfindungsgemäß zum Gleichrichten und zum Aufwärtswandeln des elektrischen Versorgungssignals eingerichtet. Insbesondere kann die Leistungsfaktorkorrektureinrichtung aus einem elektrischen Wechselsignal als elektrisches Versorgungssignal ein elektrisches Gleichsignal erzeugen, zum Beispiel eine Gleichspannung. Deren Amplitude kann gegenüber der Amplitude der Wechselspannung vergrößert sein.

Gemäß einem Ausführungsbeispiel kann der Ultraschall-Generator eine Hilfsspannungsversorgungseinheit aufweisen, die an die Leistungsfaktorkorrektureinrichtung und an den Leistungsverstärker angeschlossen bzw. zwischen diesen Funktionsblöcken verschaltet ist. Als eine solche Hilfsspannungsversorgungseinheit kann ein Hilfsspannungsnetzteil verwendet werden, das ein elektrisches Gleichsignal (zum Beispiel eine Gleichspannung) bereitstellen kann, das eine Amplitude hat, die wesentlich geringer ist als die Amplitude des gleichgerichteten Signals am Ausgang der Leistungsfaktorkorrektureinrichtung. Die Hilfsspannungsversorgungseinheit kann eine Steuerelektronik mit elektrischer Energie versorgen.

Gemäß einem Ausführungsbeispiel kann der Leistungsverstärker als digitale Leistungsendstufe, insbesondere als Halbbrückenschaltungs-Leistungsendstufe, ausgebildet sein. Die Verwendung einer solchen digitalen Endstufe als Leistungsverstärker ermöglicht eine besonders kompakte Bauweise.

Sie kann unter Einsatz von Feldeffekttransistoren ausgebildet sein. Am Ausgang eines solchen Leistungsverstärkers kann ein Rechtecksignal anliegen.

Gemäß einem Ausführungsbeispiel kann der Pulsgenerator ausgebildet sein, basierend auf einem an dem Ultraschall-Transducer anliegenden Transducer-Signal das gepulste Steuersignal mit einer Frequenz zu erzeugen, die innerhalb einer Halbwertsbreite einer Resonanzkurve des Ultraschall-Transducers liegt, insbesondere einer Resonanzfrequenz des Ultraschall-Transducers entspricht. Anders ausgedrückt kann ein Signal, das von dem Ultraschall-Transducer stammt, über eine Rückkopplungsschleife dem Pulsgenerator zugeführt werden. Der Pulsgenerator kann aus diesem Signal eine möglicherweise erforderliche Frequenzkorrektur ableiten, um die Anregungsfrequenz am Ausgang des Leistungsverstärkers, die letztlich von dem Pulsgenerator eingestellt wird, auf die (aktuelle, da möglicherweise leicht veränderliche) Resonanzfrequenz des Ultraschall-Transducer anzupassen. Damit kann erreicht werden, dass der Ultraschall-Transducer stets bei oder nahe Resonanz betrieben werden kann, was zu einer besonders effizienten Erzeugung von Ultraschall führt. Bei einer Veränderung der Resonanzfrequenz des Ultraschall-Transducers, detektierbar durch Analyse des an dem Ultraschall-Transducer abnehmbaren elektrischen Signals, kann der Pulsgenerator das Steuersignal dynamisch derart anpassen, dass das resultierende Treibersignal zum Treiben des Ultraschall-Transducers so nachgeführt wird, dass der Ultraschall-Transducers bei bzw. entsprechend seiner nunmehr veränderten Resonanzfrequenz angesteuert wird.

Gemäß einem Ausführungsbeispiel kann der Pulsgenerator ausgebildet sein, basierend auf einem an dem Ultraschall-Transducer anliegenden Transducer-Signal das gepulste Steuersignal derart zu erzeugen, insbesondere eine Frequenz des gepulsten Steuersignals derart einzustellen, dass eine Transducer-Spannung und ein Transducer-Strom in Phase sind bzw. bleiben. Bei einer detektierten Abweichung kann die Frequenz so nachgeführt werden, dass die Phasengleichheit wieder erreicht wird. Anders ausgedrückt kann eine Phasenverschiebung zwischen Transducer-Spannung und Transducer-Strom reduziert oder sogar eliminiert werden, indem die Charakteristik des gepulsten Steuersignals des Pulsgenerators basierend auf den von dem Ultraschall-Transducer an den Pulsgenerator gemeldeten elektrischen Signalen eingestellt wird.

Gemäß einem Ausführungsbeispiel kann der Pulsgenerator eine Komparatorschaltung aufweisen, die basierend auf einem an dem Ultraschall-Transducer anliegenden Transducer-Signal (insbesondere ein Transducer-Strom) eine Pulsweite des gepulsten Steuersignals vorgibt. Ferner kann der Pulsgenerator einen spannungsgesteuerten Oszillator aufweisen, der basierend auf einem an dem Ultraschall-Transducer anliegenden Transducer-Signal (insbesondere ein Transducer-Strom und eine Transducer-Spannung) eine Frequenz des gepulsten Steuersignals vorgibt. Darüber hinaus kann der Pulsgenerator einen Modulator aufweisen, der basierend auf der vorgegebenen Pulsweite und der vorgegebenen Frequenz das gepulste Steuersignal generiert und dieses dem Leistungsverstärker bereitstellt. Die Komparatorschaltung kann zur Stabilisierung der mechanischen Schwingungsamplitude den Transducer-Strom (z.B. mittels eines Gleichrichters) messen und mittels eines Vergleichers mit einem Referenzwert vergleichen. Der Transducer-Strom ist ein Maß für die mechanische Amplitude. Der Vergleicher kann die Amplitude des gleichgerichteten Signals mit dem vorgegebenen Referenz- oder Schwellwert vergleichen und die Pulsbreite des Steuersignals für den Leistungsverstärker entsprechend anpassen. Als Modulator kann ein PWM (Pulse Width Modulator) verwendet werden. Als spannungsgesteuerter Oszillator (VCO, Voltage Controlled Oscillator) kann eine elektronische Komponente verwendet werden, die eine Oszillatorfrequenz basierend auf einem Spannungssignal einstellt. Ein solcher VCO kann Teil einer PLL-Schaltung (Phase-Locked-Loop) sein. Die PLL kann die Betriebsfrequenz des Ultraschall-Transducers generieren und im Betrieb die Generatorfrequenz immer optimal der tatsächlichen Resonanzfrequenz des Transducers nachführen.

Im Weiteren werden zusätzliche exemplarische Ausführungsbeispiele des Handgeräts beschrieben. Diese gelten auch für den Ultraschall-Generator, die Verwendung und das Verfahren.

Gemäß einem Ausführungsbeispiel kann das Handgerät einen Akkumulator zum Bereitstellen des elektrischen Versorgungssignals aufweisen. Ein solcher Akkumulator kann insbesondere eine wiederaufladbare Batterie oder eine auswechselbare Batterie bzw. ein Batteriepack sein. Auf diese Art und Weise kann das Handgerät schnurlos verwendet werden, da während des Betriebs des Handgeräts kein Kabel zum Zuführen von elektrischer Energie erforderlich ist.

Gemäß einem Ausführungsbeispiel kann das Handgerät einen Steckdosenstecker zum Anschließen des Handgeräts an eine Steckdose zum Bereitstellen des elektrischen Versorgungssignals aufweisen. Gemäß diesem Ausführungsbeispiel wird das elektrische Versorgungssignal die Netzspannung sein, die von einem Stromnetz bereitgestellt werden kann.

Gemäß einem Ausführungsbeispiel kann das Handgerät als portables Handgerät, insbesondere als schnurlos betreibbares Handgerät, ausgebildet sein. Insbesondere kann das Handgerät als Werkzeug eingesetzt werden. Hierfür kann das Handgerät ein Griffstück zur Handhabung durch einen Benutzer haben. Die Elektronik, das heißt die Komponenten des Ultraschall-Generators, kann zumindest teilweise im Inneren des Handgriffs untergebracht sein. Der Befestigungsabschnitt des Handgeräts kann zum Beispiel eine Nase sein, auf die ein (insbesondere thermoplastischer) Dübel oder anderer Körper reibschlüssig oder formschlüssig aufgesteckt werden kann. Wird das Handgerät demzufolge betrieben, so kann diese Nase in Ultraschall-Vibration versetzt werden, wobei der Ultraschall von dem Ultraschall-Generator erzeugt wird. Wird auf den Befestigungsabschnitt der Dübel aufgesetzt und in mechanische Vibration versetzt, so kann, wenn der Dübel zum Beispiel in ein Loch in einem porösen Untergrund (wie etwa eine Holzplatte) eingeführt ist, der Dübel erwärmt und aufgeschmolzen werden. Nach Abschalten des Ultraschall-Generators kann der Dübel ausgehend von dem aufgeschmolzenen Zustand abgekühlt werden. Dadurch wird der Dübel in dem Loch verschweißt, da anschaulich ein Teil des aufgeschmolzenen Dübelmaterials in die porösen Hohlräume einfließt, dort verfestigt wird und damit eine formschlüssige Verbindung mit dem Untergrund eingeht.

Im Folgenden werden exemplarische Ausführungsbeispiele der vorliegenden Erfindung mit Verweis auf die folgenden Figuren detailliert beschrieben.
Figur 1 zeigt ein Blockschaltbild eines Ultraschall-Generators gemäß einem exemplarischen Ausführungsbeispiel der Erfindung.
Figur 2 zeigt einen ersten Teil einer konkreten schaltungstechnischen Realisierung der in Figur 1 gezeigten Blöcke eines Ultraschall-Generators gemäß einem exemplarischen Ausführungsbeispiel der Erfindung.
Figur 3 zeigt einen zweiten Teil der konkreten schaltungstechnischen Realisierung der in Figur 1 gezeigten Blöcke des Ultraschall-Generators gemäß einem exemplarischen Ausführungsbeispiel der Erfindung.
Figur 4 zeigt ein akkubetriebenes Handwerkzeug zum UltraschallVerschweißen von Dübeln in einem Bohrloch in einer porösen Holzplatte gemäß einem exemplarischen Ausführungsbeispiel der Erfindung.
Figur 5 zeigt ein ähnliches Handgerät wie Figur 4, das allerdings stromnetzbetrieben ist.
Figur 6 zeigt den Aufbau eines Ultraschall-Transducers eines Ultraschall-Generators gemäß einem exemplarischen Ausführungsbeispiel der Erfindung.

Gleiche oder ähnliche Komponenten in unterschiedlichen Figuren sind mit gleichen Bezugsziffern versehen.

Bei einer herkömmlichen Ansteuerung eines Ultraschall-Transducers verursachen Module wie Transformatoren hohes Gewicht, hohe Kosten und benötigen einen großen Bauraum. Kosten, Gewicht und Platzbedarf sind für den Ultraschall-Generator gemäß einem Ausführungsbeispiel der Erfindung reduziert, indem eine Schaltungsarchitektur bereitgestellt ist, bei der diese Transformator-Komponenten weggelassen werden können. Ferner kann bei einem Ausführungsbeispiel der Erfindung der Ultraschall-Transducer bei oder nahe einem sehr günstigen Arbeitspunkt betrieben werden, da ein verstärkerausgangsseitig angeordnetes Tiefpassfilter das Treibersignal für den Ultraschall-Transducer von unerwünschten hochfrequenten Störungen befreit, bevor dieses Signal dem Ultraschall-Transducer zugeführt wird und so den Einsatz von sehr kompakten, verlustarmen, digitalen Verstärkerschaltungen ermöglicht.

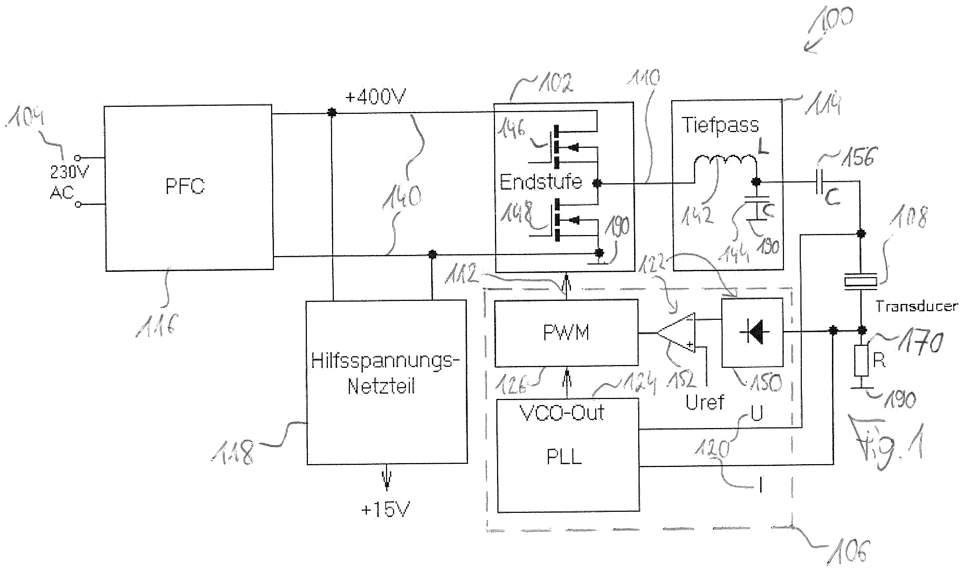

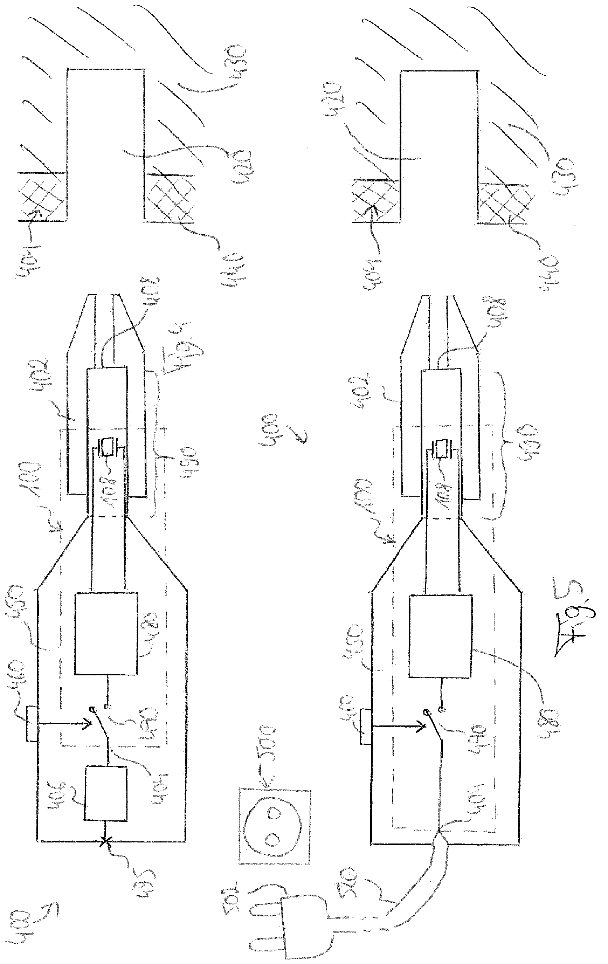

**Fig. 1** zeigt einen transformatorfreien Ultraschall-Generator 100 gemäß einem Ausführungsbeispiel der Erfindung zur Erzeugung von Ultraschallwellen, die zum Betreiben eines Handwerkzeugs zum Dübelbefestigen in einer porösen Holzplatte mittels Ultraschallschweißens verwendet werden kann (siehe Fig. 4 und Fig. 5).

Der Ultraschall-Generator 100 wird mit einer elektrischen Versorgungsspannung 104 betrieben. Die Versorgungsspannung 104 ist eine Wechselspannung, die zum Beispiel einem Stromnetz entnommen werden kann, und wird einer Leistungsfaktorkorrektureinrichtung 116 bereitgestellt. Als Eingangssignal empfängt ein Leistungsverstärker 102 eine Zwischenkreisspannung 140, die als Gleichspannung an einem Ausgang der Leistungsfaktorkorrektureinrichtung 116 bereitgestellt wird. Die Zwischenkreisspannung 140 wird dem Leistungsverstärker 102 bereitgestellt. Der Ultraschall-Generator 100, der in Fig. 1 der Übersichtlichkeit halber als Blockbild dargestellt ist, weist eine Endstufe als Leistungsverstärker 102 zum Verstärken der von der Leistungsfaktorkorrektureinrichtung 116 gleichgerichteten elektrischen Versorgungsspannung 104 auf. Der Leistungsverstärker 102 ist in diesem Fall als Halbbrückenschaltung mit zwei Feldeffekttransistoren 146, 148 ausgeführt. Der Leistungsverstärker 102 wandelt die eingangsseitige Gleichspannung in eine Abfolge von Rechtecksignalen um, wenn ihm seitens eines Pulsgenerators 106 ein entsprechendes Steuersignal zugeführt wird. Das rechteckförmige Ausgangssignal des Leistungsverstärkers 102 wird in einem Tiefpassfilter 114 von hochfrequenten Artefakten befreit, zu einem sinusförmigen Signal umgewandelt und dann einem piezoelektrischen Ultraschall-Transducer 108 zugeführt, der in Folge dessen die mechanischen Ultraschallwellen generiert. Als Ultraschall-Transducer 108 kann aber auch ein beliebiges anderes Bauelement verwendet werden, das bei Ansteuerung mit einem elektrischen Signal eine mechanische Schwingung erzeugt.

Die Leistungsfaktorkorrektureinrichtung 116 dient zum Vorstabilisieren bzw. als Entstöreinrichtung (vorteilhaft zum Erfüllen von EMV-Richtlinien, elektromagnetische Verträglichkeit) und erlaubt es, eine von der Netzspannung weitestgehend unabhängige Vorspannung zu generieren. Alternativ zu der als PFC (Power-Factor-Correction) ausgebildeten Leistungsfaktorkorrektureinrichtung 116 kann auch ein LC-Filter mit einem Gleichrichter eingesetzt werden. Ein Eingang der Leistungsfaktorkorrektureinrichtung 116 wird mit der elektrischen Versorgungswechselspannung 104 (230 V) versorgt. Diese elektrische Versorgungswechselspannung 104 wird durch die Leistungsfaktorkorrektureinrichtung 116 gleichgerichtet und aufwärts gewandelt (400 V). Gleichzeitig dient die von der Leistungsfaktorkorrektureinrichtung 116 erzeugte Zwischenkreisspannung 140 zur Versorgung eines Hilfsspannungsnetzteils 118. Dieses Hilfsspannungsnetzteil 118 ist an die Leistungsfaktorkorrektureinrichtung 116 und an den Leistungsverstärker 102 angeschlossen und dient zur Versorgung einer Steuerelektronik mit elektrischem Strom. Die Leistungsfaktorkorrektureinrichtung 116 ist für die Funktion des Schaltkreises nicht unbedingt notwendig, jedoch für die Unterdrückung von Störungen in dem Netz sehr vorteilhaft.

Der Pulsgenerator 106, dessen Aufbau unten näher beschrieben wird, dient zum Erzeugen eines gepulsten Steuersignals 112, um den Leistungsverstärker 102 gepulst anzusteuern. Dies erfolgt auf eine solche Weise, dass der Leistungsverstärker 102 als verstärktes elektrisches Versorgungssignal ein gepulstes Treibersignal 110 zum Treiben des Ultraschall-Transducers 108 erzeugt. Aus dem gepulsten Steuersignal 112 und der Zwischenkreisspannung 140 generiert der Leistungsverstärker 102 also das Treibersignal 110, das ein elektrisches Wechselsignal ist.

Das Treibersignal 110 wird durch den Tiefpassfilter 114 geführt, der zwischen dem Leistungsverstärker 102 und dem Ultraschall-Transducer 108 verschaltet ist. Das Tiefpassfilter 114 ist als LC-Glied aus einer Induktivität 142 und einer Kapazität 144 verschaltet und hat einen Durchlassbereich, der Schaltflankenartefakte aus dem Treibersignal 110 herausfiltert. Das Tiefpassfilter 114 wandelt anschaulich die Rechteckpulse, die der Leistungsverstärker 102 liefert, in sinusartige Signale um. Aufgrund des Vorsehens des Tiefpassfilters 114 ist eine verlustarm arbeitende, digitale Endstufe als Leistungsverstärker 102 einsetzbar. Nachdem das tiefpassgefilterte Treibersignal einen Schutzkondensator 156 durchlaufen hat, der Gleichspannungsanteile aus dem tiefpassgefilterten Treibersignal herausfiltern kann, wird das tiefpassgefilterte Treibersignal dem Ultraschall-Transducer 108 bereitgestellt.

Fig. 1 zeigt, dass das Tiefpassfilter 114 direkt an einen Ausgang des Leistungsverstärkers 102 angeschlossen ist. Das Tiefpassfilter 114 ist zum oberwellenfreien Ansteuern des Ultraschall-Generators 108 ausgebildet, so dass aufgrund des Wegfilterns aller Oberwellen nur eine vorzugsweise sinusförmige Grundschwingung auf den Ultraschall-Transducer 108 einwirkt. Auch höhere Harmonische werden von dem Tiefpassfilter 114 herausgefiltert. Somit ist das Tiefpassfilter 114 konfiguriert (insbesondere werden die Werte der Induktivität 142 und der Kapazität 144 entsprechend eingestellt), dass die entsprechenden Störsignale für den Ultraschall-Transducer 108 (das heißt insbesondere ganzzahlige Vielfache der Grundschwingungsfrequenz) durch das Tiefpassfilter 114 entfernt werden.

Zwischen den Ultraschall-Transducer 108 und ein elektrisches Referenzpotential 190 (zum Beispiel Masse) ist ein Messwiderstand 170 geschaltet.

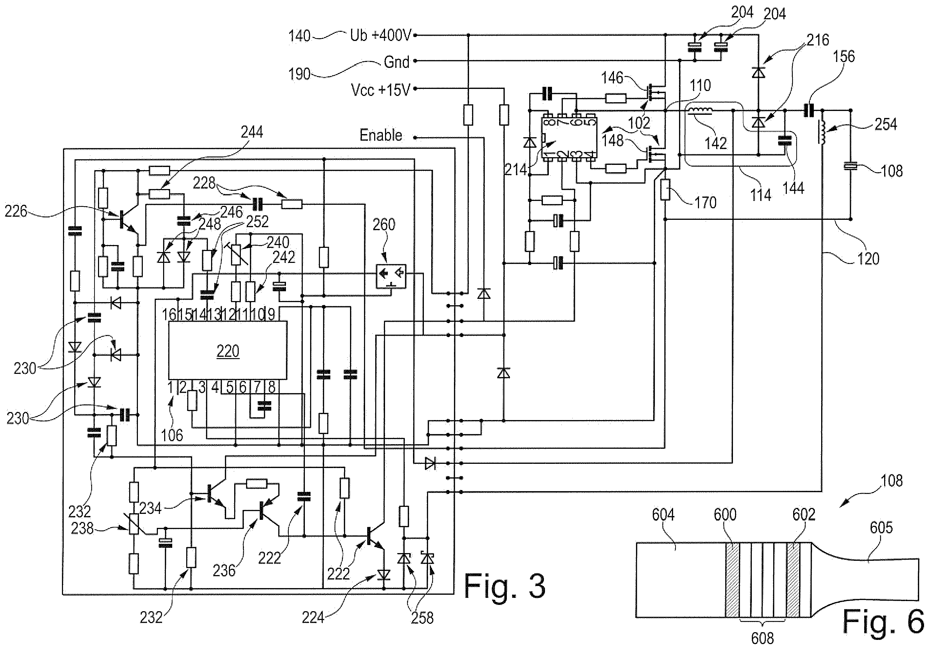

Um auch bei transformatorfreier Bauweise des Ultraschall-Generators 100 ein sehr hohes Sicherheitsniveau sicherzustellen, kann in dem Ultraschall-Transducer 108 selbst eine Sicherheitsisolationseinrichtung vorgesehen sein. Insbesondere können zwei elektrisch isolierende und schallharte Keramikscheiben innerhalb des Ultraschall-Transducers 108 vorgesehen sein und zum Vermeiden elektrischer Überschläge und dergleichen dienen. Dies ist in Fig. 6 näher gezeigt.

Der Pulsgenerator 106 weist eine Komparatorschaltung 122 auf, die basierend auf einem an dem Ultraschall-Transducer 108 anliegenden Transducer-Signal 120 eine Pulsweite des gepulsten Steuersignals 112 vorgibt. Genauer gesagt, wird in der Komparatorschaltung 122 das Stromsignal des Transducers 108 in einem Gleichrichter 150 zunächst gleichgerichtet. Dieses gleichgerichtete Stromsignal wird an einem Komparator 152 mit einem vorgebbaren Referenzwert U_{ref} verglichen. Ein von dem Komparator 152 erzeugtes Ausgangssignal wird dann einem Pulsweitenmodulator 126 des Pulsgenerators 106 zugeführt, damit wird die Pulsweite des Steuersignals 112 so gesteuert.

Der Pulsweitenmodulator 126 erhält ein zweites Eingangssignal von einem spannungsgesteuerten Oszillator 124 (Voltage Controlled Oscillator), der Teil einer Phase-Locked-Loop-Schaltung (PLL) ist. Der spannungsgesteuerte Oszillator 124 gibt basierend auf dem an dem Ultraschall-Transducer 108 anliegenden Transducer-Signal 120, genauer gesagt die Spannung und der Strom an dem Transducer 108, eine Frequenz des gepulsten Steuersignals 112 vor. Der Pulsweitenmodulator 126 generiert dann basierend auf der vorgegebenen Pulsweite und der vorgegebenen Frequenz das gepulste Steuersignal 112 und stellt dieses dem Leistungsverstärker 102 bereit.

Wie Fig. 1 zu entnehmen ist, ist aufgrund der beschriebenen Schaltungsarchitektur der Ultraschall-Generator 100 versorgungssignalseitig wie auch transducerseitig von einem Transformator frei, so dass der Ultraschall-Generator 100 eine kompakte Bauweise hat. Genauer gesagt, ist ein eingangsseitiges Ende des Ultraschall-Generators 100 als elektronische Schnittstelle zum Anschließen an eine Einrichtung zum Bereitstellen der elektrischen Versorgungsspannung 104 ausgebildet. Dagegen ist das ausgangsseitige Ende des Ultraschall-Generators 100 durch den Ultraschall-Transducer 108 gebildet. Der Ultraschall-Generator 100 erlaubt das Erzeugen leistungsstarken Ultraschalls bei platzsparender Schaltungsarchitektur. Der Ultraschall-Generator 100 kann den Ultraschall-Transducer 108 mit einer Frequenz anregen, die bei oder nahe der Resonanzfrequenz des Ultraschall-Transducers 108 liegt bzw. bei Veränderung der Resonanzfrequenz des Ultraschall-Transducers 108 dieser folgt.

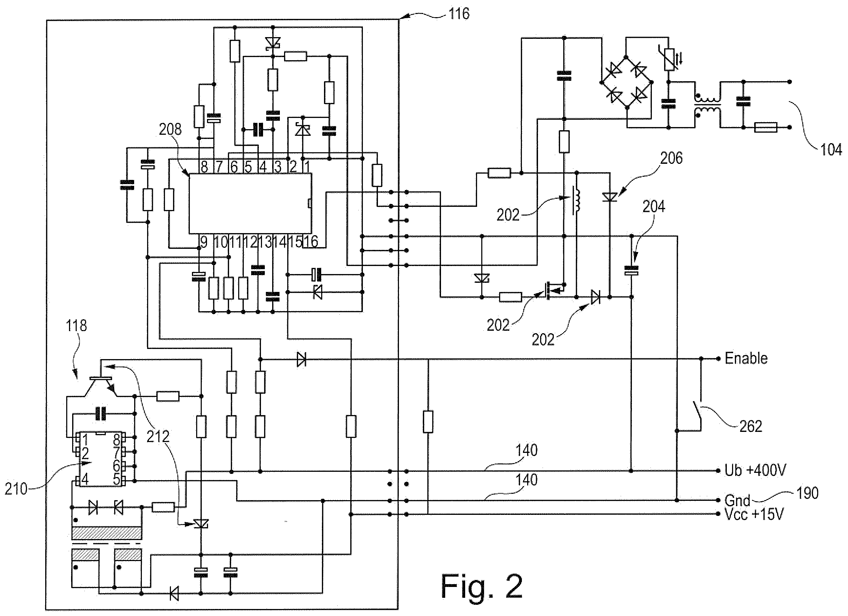

**Fig. 2** und **Fig. 3** zeigen Teile einer konkreten schaltungstechnischen Realisierung des Blockschaltbilds aus Fig. 1 und sind mit den entsprechenden Bezugszeichen versehen.

Die Schaltungsarchitektur des beschriebenen Ausführungsbeispiels wird nun nochmals ausführlich dargestellt.

Die Zwischenkreisspannung 140 versorgt das 15-V-Hilfsspannungsnetzteil 118 und die Halbbrücken-Leistungsendstufe 102 für den Ultraschall-Transducer 102. Um harte Schaltflanken vom Ultraschall-Transducer 102 fern zu halten, ist hinter der Endstufe 102 dem Ultraschall-Transducer 102 das L-C-Tiefpassfilter 114 vorgeschaltet. Die Betriebsfrequenz des Ultraschall-Transducer 102 wird mit der PLL erzeugt. Der Phasenkomparator der PLL vergleicht die Phasenlage der Transducerspannung mit der des Transducerstroms und regelt den VCO in der Weise, dass Spannung und Strom in Phase sind. Das ist genau dann der Fall, wenn der Ultraschall-Transducer 102 auf seiner mechanischen Resonanzfrequenz schwingt.

Um die mechanische Schwingungsamplitude zu stabilisieren, wird der Transducerstrom, der im Resonanzfall ein direktes Maß für die mechanische Amplitude ist, mit dem Gleichrichter 150 gemessen. Der als Regelverstärker ausgebildete Komparator 152 vergleicht die Amplitude mit dem vorgegebenen Sollwert U_{ref} und regelt die Pulsbreite der Endstufe 102 entsprechend herunter. Bei maximaler Ausgangsleistung arbeitet die Endstufe 102 zum Beispiel mit einem Puls-Pausen-Verhältnis von 50%.

Die Leistungsfaktorkorrektureinrichtung 116 dient zur Unterdrückung hochfrequenter Störungen und ist netzeingangsseitig als passives Entstörfilter ausgebildet. Es folgt ein Heißleiter zur Begrenzung des Ladestromes der Zwischenkreiskondensatoren und ein Brückengleichrichter. Schaltkreiskomponenten 202 bilden einen Boost-Konverter für die PFC-Schaltung. Auch ohne Funktion der PFC-Steuerelektronik laden sich die Zwischenkreiskondensatoren 204 nach dem Anlegen der Netzspannung sofort auf den Scheitelwert der Netzspannung auf. Diode 206 hält diesen Einschaltstromstoß von Schaltkreiskomponenten 202 fern. Die Scheitelspannung der Netzspannung reicht in jedem Fall aus, das 15 V-Hilfsnetzteil 118 zu starten. Dieses versorgt die PFC-Steuerelektronik, die dann in Funktion treten kann und die Zwischenkreisspannung 140 auf 400 V hochsetzt. Die Steuerelektronik ist mit einem Chip 208 aufgebaut. Der Chip 208 arbeitet mit konstanter Schaltfrequenz und hat den Vorteil, dass er keine Hilfswicklung auf der PFC-Drossel benötigt. Dadurch läßt sich als PFC-Drossel eine Ringkerndrossel geringer Baugröße verwenden.

Für das Hilfsspannungsnetzteil 118 kann ein Chip 210 verwendet werden. Dieser hat einmal den Vorteil, dass er bei fehlender Ausgangslast sehr energiesparend ist. Da die Ausgangsspannung gegenüber der Netzspannung nicht galvanisch getrennt ist, erfolgt die Regelung der Ausgangsspannung nicht, wie üblich, mit einem Optokoppler, sondern mit Schaltkreiskomponenten 212. Ab einer Ausgangsspannung von etwa 13 V beginnt eine Zener-Diode der Schaltkreiskomponenten 212 zu leiten. Ab etwa 15 V ist dann auch die Basisspannung eines Transistors der Schaltkreiskomponenten 212 so hoch, dass dieser zu leiten beginnt und den Chip 210 herunterregelt.

Die Leistungsendstufe 102 ist aus einer Halbrückenschaltung mit zwei N-Kanal-MOSFETs 146, 148 gebildet, die direkt mit der Zwischenkreisspannung 140 von 400 V betrieben wird. Die Ansteuerung der MOSFETs 146, 148 übernimmt ein integrierter Halbbrücken-Gate-Treiber-Chip 214.

Dadurch vereinfacht sich insbesondere die normalerweise etwas schwierige Ansteuerung von Transistor 146. Der Chip 214 erzeugt in der Umschaltphase außerdem kleine Austastlücken (Totzeit), um sicher zu stellen, dass niemals beide MOSFETs 146, 148 gleichzeitig leitend sind, was die MOSFETs 146, 148 negativ beeinflussen würde.

Um den Ultraschall-Transducer 108 mit möglichst wenig Oberwellen zu belasten, ist der Leistungsendstufe 102 als Ausgangsfilter der LC-Tiefpass 116, bestehend aus Induktivität 142 und Kapazität 144, nachgeschaltet. Die Resonanzfrequenz dieses LC-Gliedes ist so gewählt, dass sie auf jeden Fall über der höchstmöglichen Schaltfrequenz liegt. Um eine Überlastung der Endstufe 102 durch resonantes Verhalten des LC-Gliedes zu verhindern, begrenzen Dioden 216 die Ausgangsspannung des Filters. Da sich auf der Halbbrückenausgang noch ein DC-Anteil von bis zu 200 V befinden kann, koppelt Kondensator 156 den Wechselspannungsanteil des Ausgangssignales aus.

Bei dem PWM-Modulator 126 erzeugt die Schaltfrequenz der Oszillator 124 eines Chips 220 mit einem Tastverhältnis von 50%. Um das Tastverhältnis modulierbar zu machen, ist ein Zeitglied, bestehend aus Schaltkreiskomponenten 222, nachgeschaltet. Die Zeitkonstante des ohmschen Widerstands und des Kondensators der Schaltkreiskomponenten 222 ist so groß gewählt, dass sie auf jeden Fall größer ist als die halbe Periodendauer der Schaltfrequenz. Ohne weitere Maßnahmen liegt daher die Schaltfrequenz auch am Kollektor des Transistors der Schaltkreiskomponenten 222 mit einem Tastverhältnis von 50% an. Während der Sperrphase dieses Transistors liegt an dessen Basis eine negative Spannung von bis zu ca. -11 V an, die sich durch den Ladestrom des ohmschen Widerstands während der halben Periodendauer der Schaltfrequenz durch Entladung des Kondensators entsprechend nach oben verschiebt, jedoch nicht ausreicht, um den Transistor durchzuschalten. Sobald ein zusätzlicher Ladestrom über den Kollektor des Transistors fließt, kann die Basisspannung des Transistors jedoch bereits vor dem Ende der halben Periodendauer soweit ansteigen, dass dieser durchschaltet. Mit dem Kollektorstrom des Transistors läßt sich so die Pulsbreite des Signales am Kollektor des Transistors kontinuierlich von 0 bis 50% einstellen. Mit diesem Signal wird dann der Halbbrückentreiber angesteuert, sodass dieses mit einer Amplitude von 400 Vss am Ausgang der Leistungsendstufe 102 zur Verfügung steht.

Eine Diode 224 ermöglicht ein Absinken der Basisspannung des Transistors auf bis zu -11 V. Ohne diese Diode 224 darf die Basisspannung nur auf die maximal zulässige Basis-Emitter-Sperrspannung von ca. -5 V absinken.

Der Transducerstrom wird für die Regelung der mechanischen Schwingungsamplitude und für die Bestimmung der Phasenbeziehung zwischen Transducerspannung und Transducerstrom benötigt und somit gemessen. Die Halbbrückenspeisung des Ultraschall-Transducers 108 hat den Vorteil, dass ein Anschluss des Ultraschall-Transducers 108 an Masse 190 liegt und der Strom einfach mit einem Shunt-Widerstand 170 gemessen werden kann, der dann eine massebezogene Messspannung liefert. Um größere Verluste in Widerstand 170 zu vermeiden, kann dieser mit 0,1 Ohm recht niedrig gewählt werden. Die relativ kleine Messspannung wird daher mit dem aus Transistor 226 bestehenden Verstärker etwa um den Faktor 200 verstärkt. Transistor 226 wird in Basisschaltung betrieben und das Signal deshalb über Schaltkreiskomponenten 228 auf den Emitter eingekoppelt. Das verstärkte Stromsignal steht schließlich am Kollektor von Transistor 226 zur Verfügung.

Im Weiteren wird die Regelung der Transduceramplitude beschrieben. Unter der Voraussetzung, dass die mechanische Transduceramplitude proportional zum Transducer-Wirkstrom ist, kann das Stromsignal am Kollektor von Transistor 226 zur Regelung der Transduceramplitude herangezogen werden. Dazu wird das Stromsignal mit einer Villard-Verdopplerschaltung 230 gleichgerichtet. Ein Spannungsteiler 232 teilt die noch relativ hohe Istwert-Spannung auf unter 12 V herunter. Da der Spannungsteiler 232 sehr hochohmig ist, folgt noch Emitterfolger 234 als Impedanzwandler. Transistor 236 dient nun als Komparator, der den Istwert von Transistor 234 mit dem mit Verstärker 238 einstellbaren Sollwert vergleicht. Ist der Istwert größer als der Sollwert, beginnt Transistor 236 zu leiten, und es fließt ein zusätzlicher Entladestrom auf dem Kondensator von Schaltkreiskomponenten 222, der die Pulsbreite des Steuersignales für die Leistungsendstufe 102 soweit reduziert, dass sich der Istwert dem Sollwert anpasst. Diese einfache Regelung ohne Operationsverstärker ist für die gewünschte Anwendung völlig ausreichend.

Um einen möglichst hohen Wirkstrom im Ultraschall-Transducer 108 zu erhalten, wird die Schaltfrequenz so geregelt, dass Transducerspannung und Transducerstrom möglichst in Phase sind. Zur Phasenregelung dient eine mit Chip 220 aufgebaute PLL. Die Mittenfrequenz des VCO wird mit Verstärker 240 auf die mechanische Resonanzfrequenz des Ultraschall-Transducers 108 eingestellt. Der Fangbereich der PLL ist mit dem ohmschen Widerstand 242 auf ca. ±0,5 kHz festgelegt. Damit ist sichergestellt, dass die PLL nicht auf einer Nebenresonanz einrasten kann. Die Eingänge des Phasenkomparators des Chips 220 befinden sich an zwei Anschlüssen des Chips 220. Das von Transistor226 kommende Stromsignal wird mit dem ohmschen Widerstand 244 hochohmig ausgekoppelt und mit Kondensator 246 vom DC-Anteil befreit. Dioden 248 begrenzen das Signal auf ca. 1 Vss. Das auf 1 Vss begrenzte Signal gelangt dann über Schaltkreiskomponente 252 direkt auf einen Anschluss des Chips 220. Die Transducerspannung wird mit einer Drossel 254 direkt am Ultraschall-Transducer 108 abgenommen. Da der verwendete Phasenkomparator im Arbeitspunkt eine Phasenverschiebung von 90° benötigt, wird die Transducerspannung mit Drossel 254 um 90° verzögert. Maßgeblich ist der Spulenstrom von Drossel 254, der gegenüber der Transducerspannung, die nahezu identisch mit der an Drossel 254 anliegenden Spannung ist, um 90° verzögert ist. Der Vorzeichenwechsel des Spulenstromes von Drossel 254 ist an den Dioden 258 messbar, wo die Spannung zwischen ca. -0.3 V und +12 V pendelt. Diese Spannung wird zur Ansteuerung des Phasenkomparators benötigt und ist noch relativ gering gegenüber der Transducerspannung, sodass die Phasenverschiebung nicht wesentlich gestört wird.

Damit die Phasen- und Amplitudenregelung eine saubere und stabile Betriebsspannung bekommen, wird diese mit einem Spannungsregler 260 auf 12 V geregelt.

Um beim Ein- und Ausschalten des Gerätes nicht jedes Mal die Kondensatoren des Zwischenkreises auf- und entladen zu müssen und eine schnelle Betriebsbereitschaft zu gewährleisten, wird das Gerät über ein elektronisches Signal ein- und ausgeschaltet. Über einen Taster 262 (Öffner) wird die PFC 116 und die Leistungsendstufe 102 freigegeben, sodass der Energieverbrauch im inaktivem Zustand sehr gering ist.

Die Elektronik des Ultraschall-Transducers 108 wird direkt aus der Netzspannung versorgt. Die aktive Leistungsfaktorkorrektur (siehe PFC 116) sorgt für eine konstante Zwischenkreisspannung 140 von 400 V und eine näherungsweise ohmsche Belastung der Netzspannung. Die Leistungsreserve der PFC 116 ermöglicht außerdem einen Betrieb des Gerätes ab einer NetzWechselspannung von ca. 90 V.

Im Blockschaltbild gemäß Fig. 1 ist zu erkennen, dass die Schaltungsarchitektur ohne netz- und ausgangsseitigen Transformator auskommt (und damit enorm Bauraum und Gewicht einspart). Die Sicherheitsisolierung wird in diesem Falle über zwei zusätzliche, isolierende Keramikscheiben im Ultraschall-Transducer 108 selbst sichergestellt, wie in Fig. 6 näher gezeigt.

Ein anderes vorteilhaftes Merkmal ist die Verwendung des Tiefpassfilters 114 am Ausgang der digitalen Leistungsendstufe 102. Dieses Tiefpassfilter 114 ist so ausgelegt, dass es die volle Ausgangsleistung des Ultraschall-Generators 100 verkraftet. Somit können die Vorzüge einer digitalen Endstufe 102 genutzt werden, und es kann trotzdem eine sinusförmige Ansteuerspannung für den Piezo-Transducer 108 erzeugt werden. Das heißt, dass die digitale Endstufe 102 eine extrem kleine Bauweise und geringste Verlustleistung ermöglicht. Daher ist nahezu keine Wärme abzuführen und durch das LC-Leistungsfilter 114 wird fast ohne weitere Verluste eine oberwellenfreie Ansteuerung des Ultraschall-Transducers 108 ermöglicht. Damit wird sowohl die Erwärmung im Ultraschall-Transducers 108 gering gehalten, als auch die Erzeugung von elektromagnetischen Störungen (EMV). Die letzten beiden Punkte stellen bei größeren Ausgangsleistungen herkömmlich immer wieder ein technisches Problem dar, dem herkömmlich meist mit höchst komplexen und aufwendigen Schaltungen und hohen Taktraten begegnet wird. Die erfindungsgemäße Lösung ermöglicht es dagegen, eine hohe Ansteuerungsqualität auf kleinem Bauraum und mit geringem Aufwand zu verwirklichen.

**Fig. 4** zeigt ein portables Handwerkzeug 400 gemäß einem exemplarischen Ausführungsbeispiel der Erfindung zum Befestigen eines thermoplastischen Dübels 402 an einem Untergrund 404 mittels Ultraschallschweißens.

Der Untergrund 404 ist mit einer Bohrung 420 versehen, in welcher der Dübel 402 zu versenken ist. Anschließend kann eine nicht gezeigte Schraube oder dergleichen in dem versenkten Dübel 402 verankert werden. Der Dübel 402 wird, wie im Weiteren beschrieben, in der Bohrung 420 verschweißt, indem mittels Ultraschalls das Material des Dübels 402 zunächst in Vibration versetzt und dadurch erwärmt wird und nachfolgend mittels Abkühlens des Dübels 402 selbiger an der Wandung der Bohrung 420 verschweißt wird. Eine solche Befestigungsart ist insbesondere an einem Untergrund 404 vorteilhaft, der nicht die erforderliche Stabilität aufweist, um herkömmliche Dübel verankern zu können. In Fig. 4 ist zum Beispiel gezeigt, dass der Untergrund 404 aus Karton mit wabenförmiger Geometrie, siehe Bezugszeichen 430, und einer deckseitigen Vollholzplatte 440 gebildet ist. Ein anderes Anwendungsbeispiel wäre die Versenkung eines Dübels in Knochenmaterial eines Patienten.

Das portable Handwerkzeug 400 gemäß Fig. 4 hat einen nasenförmigen Befestigungsabschnitt 408 zum vorübergehenden Befestigen, insbesondere händischen Aufstecken, des Dübels 402 vor dem Prozess des Ultraschallschweißens. Nachdem der Dübel 402 auf den Befestigungsabschnitt 408 aufgesteckt worden ist, kann der zumindest teilweise in einem Handgriff 450 untergebrachte Ultraschall-Generator 100 durch benutzerseitiges Betätigen eines Knopfs 460 und dadurch bedingtes Schließen eines Schalters 470 aktiviert werden. Durch Schließen des Schalters 470 wird die Schaltung 480 mit einem wiederaufladbaren Akkumulator 406 als Energieversorgungsquelle elektrisch gekoppelt, indem der Akkumulator 406 über den geschlossenen Schalter 470 dem Schaltungsteil 480 des Ultraschall-Generators 100 die elektrische Versorgungsspannung 104 bereitstellt. Auf diese Weise kann der zum Beispiel in dem Befestigungsabschnitt 408 untergebrachte Ultraschall-Transducer 108 in mechanische Vibration versetzt werden, so dass dieser mechanische Ultraschallwellen erzeugt. Dadurch wird auch der nun in dem Hohlraum 420 (nicht gezeigt) eingeführte Dübel 402 in Ultraschallschwingung versetzt und dadurch stark erwärmt. Der Dübel 402 schmilzt dadurch in dem Loch 420 zumindest teilweise auf. Wird nun das Handwerkzeug 400 durch nochmaliges Betätigen des Knopfs 460 deaktiviert (indem der Schalter 470 wieder geöffnet wird), so beginnt der aufgeschmolzene Dübel 402 sich zu verfestigen und sich damit mit der porösen Wandung der Bohrung 420 zu verbinden. Während des aktiven Prozesses des Ultraschallschweißens kann zum Beispiel nur der vordere Teil 490 in Ultraschall-Vibration versetzt werden, wohingegen der Handgriff 450 in Ruhe verbleiben kann.

**Fig. 5** unterscheidet sich von Fig. 4 im Wesentlichen nur dadurch, dass anstelle des wiederaufladbaren Akkumulators 406, der über eine Aufladeschnittstelle 495 wieder aufgeladen werden kann, eine Kabelverbindung (siehe Bezugszeichen 520) zu einem Steckdosenstecker 502 vorgesehen ist. Wenn der Steckdosenstecker 502 in eine Steckdose 500 eingesteckt ist, kann die elektrische Versorgungsspannung von der Steckdose 500 dem Ultraschall-Generator 100 zugeführt werden. Der übrige Betrieb ist gemäß Fig. 5 wie gemäß Fig. 4.

Ein erfindungsgemäß einsetzbarer Ultraschall-Transducer 108 ist in **Fig. 6** skizziert. Die beiden Endstücke sind Metallteile 604, 606, die in ihrer Form und Länge genau auf die Resonanzfrequenz abgestimmt sind. Dazwischen befindet sich ein Stack von in diesem Fall vier Piezoringen 608, die mechanisch in Serie und elektrisch parallel geschaltet sind. Dies wird durch dünne metallische Elektrodenscheiben (nicht gezeigt) erreicht, die jeweils zwischen den Piezoringen 608 eingelegt werden. Dann wird jede zweite Elektrode jeweils an die eine bzw. an die andere Versorgungsleitung angeschlossen. Die elektrische Isolation wird bei dem Ultraschall-Transducer 108 durch in diesem Fall zwei zusätzliche, keramische Ringe 600, 602 sichergestellt, die vor und hinter dem letzten Piezoring 608 eingebaut sind. Der gesamte Transduceraufbau, wie in Fig. 6 gezeigt, wird am Schluss mit einer soliden Schraube axial zusammengehalten und fest verspannt. Als mögliches Material für die keramischen Ringe 600, 602 sind auch Glas, Glaskeramik, natürlicher Stein oder Mineralien in Plattenform einsetzbar. Statt aus Keramik (zum Beispiel Zirkonoxid, Aluminiumoxid) können die Zusatzkörper 600, 602 auch aus einem anderen schallharten und elektrisch isolierenden Körper gebildet sein. Somit sind als Sicherheitsisolationseinrichtung die zwei elektrisch isolierenden Keramik-Zusatzkörper 600, 602 innerhalb des Ultraschall-Transducers 108 angeordnet, genauer gesagt so, dass jeweils einer der Keramik-Zusatzkörper 600, 602 zwischen einem der Metallteile 604, 606 und den piezoelektrischen Körpern 608 angeordnet sind. Diese Sicherheitsisolationseinrichtung gewährleistet, dass auch ohne Vorsehen eines ausgangsseitigen Transformators die Schaltung betriebssicher ausgebildet sein kann.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Transformatorfreier Ultraschall-Generator (100) zum Erzeugen von Ultraschall, insbesondere für ein Handgerät (400) zum Befestigen eines Körpers (402) an einem Untergrund (404) mittels Ultraschallschweißens, wobei der Ultraschall-Generator (100) aufweist:
einen Leistungsverstärker (102) zum Verstärken eines elektrischen Versorgungssignals (104);
einen Pulsgenerator (106) zum Erzeugen eines gepulsten Steuersignals (112) zum gepulsten Steuern des Leistungsverstärkers (102) derart, dass der Leistungsverstärker (102) als verstärktes elektrisches Versorgungssignal ein gepulstes, digitales Treibersignal (110) zum Treiben eines Ultraschall-Transducers (108) erzeugt;
den Ultraschall-Transducer (108) zum Erzeugen des Ultraschalls bei Bereitstellen des Treibersignals (110) an den Ultraschall-Transducer (100); und
ein zwischen dem Leistungsverstärker (102) und dem Ultraschall-Transducer (108) verschaltetes Tiefpassfilter (114) zur verlustarmen, sinusförmigen Signalformung des digitalen Treibersignals (110) und zum Herausfiltern hochfrequenter Komponenten,
wobei der Ultraschall-Generator (100) sowohl versorgungssignalseitig (104) als auch transducerseitig (108) von einem Transformator frei ist,
**gekennzeichnet durch**
einen unmittelbar zwischen dem Tiefpassfilter (114) und dem Ultraschall-Transducer (108) verschalteten Schutzkondensator (156) zum Herausfiltern von Gleichspannungsanteilen aus dem tiefpassgefilterten Treibersignal und Bereitstellen des gefilterten Treibersignals an den Ultraschall-Transducer (108), wobei das Tiefpassfilter (114) als LC-Glied aus einer Induktivität (142) und einer Kapazität (144) ausgebildet ist, und **durch**
zwei in Reihe geschaltete Dioden (216), die zum Begrenzen der Ausgangsspannung des Tiefpassfilters (114) vorgesehen sind, um eine Überlastung der Leistungsstufe (102) **durch** ein resonantes Verhalten des LC-Gliedes zu verhindern.

2. Ultraschall-Generator (100) gemäß Anspruch 1, wobei der Ultraschall-Transducer (108) eine Sicherheitsisolationseinrichtung aufweist, insbesondere mindestens einen elektrisch isolierenden Zusatzkörper (600, 602), weiter insbesondere zwei elektrisch isolierende Zusatzkörper (600, 602), innerhalb des Ultraschall-Transducers (108).

3. Ultraschall-Generator (100) gemäß Anspruch 1 oder 2, aufweisend eine Leistungsfaktorkorrektureinrichtung (116), die zwischen eine Einrichtung (406, 500) zum Bereitstellen des elektrischen Versorgungssignals (104) und den Leistungsverstärker (102) geschaltet ist.

4. Ultraschall-Generator (100) gemäß Anspruch 3, wobei die Leistungsfaktorkorrektureinrichtung (116) zum Gleichrichten und zum Aufwärtswandeln des elektrischen Versorgungssignals (104) eingerichtet ist.

5. Ultraschall-Generator (100) gemäß Anspruch 3 oder 4, aufweisend eine Hilfsspannungsversorgungseinheit (118), die an die Leistungsfaktorkorrektureinrichtung (116) und an den Leistungsverstärker (102) angeschlossen ist.

6. Ultraschall-Generator (100) gemäß einem der Ansprüche 3 bis 5, wobei zusätzlich zu der Leistungsfaktorkorrektureinrichtung (116) auf diese (116) folgend ein Heißleiter zur Begrenzung eines Ladestroms von Zwischenkreiskondensatoren und ein Brückengleichrichter vorgesehen sind.

7. Ultraschall-Generator (100) gemäß einem der Ansprüche 1 bis 6, wobei der Leistungsverstärker (102) als digitale Leistungsendstufe, insbesondere als Halbbrückenschaltungs-Leistungsendstufe, ausgebildet ist.

8. Ultraschall-Generator (100) gemäß einem der Ansprüche 1 bis 7, wobei der Pulsgenerator (106) ausgebildet ist, basierend auf einem an dem Ultraschall-Transducer (108) anliegenden Transducer-Signal (120) das gepulste Steuersignal (112) mit einer Frequenz zu erzeugen, die innerhalb einer Halbwertsbreite einer Resonanzkurve des Ultraschall-Transducers (108) liegt, insbesondere einer Resonanzfrequenz des Ultraschall-Transducers (108) entspricht.

9. Ultraschall-Generator (100) gemäß einem der Ansprüche 1 bis 8, wobei der Pulsgenerator (106) ausgebildet ist, basierend auf einem an dem Ultraschall-Transducer (108) anliegenden Transducer-Signal (120) das gepulste Steuersignal (112) derart zu erzeugen, insbesondere eine Frequenz des gepulsten Steuersignals (112) derart einzustellen, dass eine Transducer-Spannung (U) und ein Transducer-Strom (I) in Phase verbleiben oder gebracht werden.

10. Ultraschall-Generator (100) gemäß einem der Ansprüche 1 bis 9, wobei ein Transducer-Strom (I), der für eine Regelung der mechanischen Schwingungsamplitude des Ultraschall-Transducers (108) und für eine Bestimmung einer Phasenbeziehung zwischen der Transducer-Spannung (U) und dem Transducer-Strom (I) benötigt wird, mittels eines Shunt-Widerstands (170) gemessen wird, der zwischen einem Anschluss des Ultraschall-Transducers (108) und Masse verschaltet ist und eine massebezogene Messspannung liefert, die mit einem einen Transistor (226) umfassenden Verstärker verstärkt wird, wobei das verstärkte Stromsignal am Kollektor des Transistors (226) zur Verfügung steht.

11. Ultraschall-Generator (100) gemäß einem der Ansprüche 1 bis 10, wobei der Pulsgenerator (106) aufweist:
eine Komparatorschaltung (122), die basierend auf einem an dem Ultraschall-Transducer (108) anliegenden Transducer-Signal (120) eine Pulsweite des gepulsten Steuersignals (112) vorgibt;
einen spannungsgesteuerten Oszillator (124), der basierend auf einem an dem Ultraschall-Transducer (108) anliegenden Transducer-Signal (120) eine Frequenz des gepulsten Steuersignals (112) vorgibt;
einen Modulator (126), der basierend auf der vorgegebenen Pulsweite und der vorgegebenen Frequenz das gepulste Steuersignal (112) generiert und dieses dem Leistungsverstärker (102) bereitstellt.

12. Handgerät (400), insbesondere transformatorfreies Handgerät (400), zum Befestigen eines Körpers (402) an einem Untergrund (404) mittels Ultraschallschweißens, wobei das Handgerät (400) aufweist:
einen Befestigungsabschnitt (408) zum vorübergehenden Befestigen des Körpers (402) an dem Handgerät (400) während des Ultraschallschweißens;
einen Ultraschall-Generator (100) gemäß einem der Ansprüche 1 bis 11 zum Erzeugen von Ultraschall und zum Beaufschlagen des an dem Befestigungsabschnitt (408) befestigten Körpers (402) mit dem Ultraschall, um den Körper (402) mittels des Ultraschalls an dem Untergrund (404) zu verschweißen.

13. Handgerät (400) gemäß Anspruch 12, aufweisend einen Akkumulator (406) zum Bereitstellen des elektrischen Versorgungssignals (104).

14. Handgerät (400) gemäß Anspruch 12 oder 13, aufweisend einen Steckdosenstecker (502) zum Anschließen des Handgeräts (400) an eine Steckdose (500) zum Bereitstellen des elektrischen Versorgungssignals (104).

15. Handgerät (400) gemäß einem der Ansprüche 12 bis 14, ausgebildet als portables Handgerät (400), insbesondere als schnurlos betreibbares Handgerät (400).

16. Verwendung eines Handgeräts (400) gemäß einem der Ansprüche 12 bis 15 oder eines Ultraschall-Generators (100) gemäß einem der Ansprüche 1 bis 11 zum Befestigen eines Dübels (402) an einem Holzuntergrund (404) mittels ultraschallinduzierten Aufschmelzens des Dübels (402) und mittels Verfestigens des aufgeschmolzenen Dübels (402) nach Abschalten des Ultraschalls.

17. Verfahren zum transformatorfreien Erzeugen von Ultraschall mittels eines Ultraschall-Generators (100), insbesondere für ein Handgerät (400) zum Befestigen eines Körpers (402) an einem Untergrund (404) mittels Ultraschallschweißens, wobei das Verfahren aufweist:
Verstärken eines elektrischen Versorgungssignals (104) mittels eines Leistungsverstärkers (102);
Erzeugen eines gepulsten Steuersignals (112) zum gepulsten Steuern des Leistungsverstärkers (102) mittels eines Pulsgenerators (106) derart, dass der Leistungsverstärker (102) als verstärktes elektrisches Versorgungssignal ein gepulstes, digitales Treibersignal zum Treiben eines Ultraschall-Transducers (108) erzeugt;
Herausfiltern von hochfrequenten Komponenten und verlustarmes Formen eines sinusförmigen Treibersignals mittels eines zwischen dem Leistungsverstärker (102) und dem Ultraschall-Transducer (108) verschalteten Tiefpassfilters (114);
Herausfiltern von Gleichspannungsanteilen aus dem tiefpassgefilterten Treibersignal mittels eines unmittelbar zwischen dem Tiefpassfilter (114) und dem Ultraschall-Transducer (108) verschalteten Schutzkondensators (156), wobei das Tiefpassfilter (114) als LC-Glied aus einer Induktivität (142) und einer Kapazität (144) ausgebildet ist,
Erzeugen des Ultraschalls durch Bereitstellens des mittels des Tiefpassfilters (114) und des Schutzkondensators (156) gefilterten Treibersignals (110) an den Ultraschall-Transducer (108); und
Begrenzen der Ausgangsspannung des Tiefpassfilters (114) mittels zweier in Reihe geschalteter Dioden (216), und damit Verhindern einer Überlastung der Leistungsstufe (102) durch ein resonantes Verhalten des LC-Gliedes;
wobei der Ultraschall-Generator (100) sowohl versorgungssignalseitig (104) als auch transducerseitig (108) von einem Transformator frei ist.

## Claims

1. A transformer-free ultrasonic generator (100) for generating ultrasound, particularly for a handheld device (400) for fastening a body (402) on a substrate (404) by means of ultrasonic welding, wherein the ultrasonic generator (100) features:
a power amplifier (102) for amplifying an electrical supply signal (104);
a pulse generator (106) for generating a pulsed control signal (112) for controlling the power amplifier (102) in a pulsed fashion such that the power amplifier (102) generates an amplified electrical supply signal in the form of a pulsed, digital drive signal (110) for driving an ultrasonic transducer (108);
the ultrasonic transducer (108) for generating ultrasound when the drive signal (110) is supplied to the ultrasonic transducer (100); and
a lowpass filter (114) that is connected between the power amplifier (102) and the ultrasonic transducer (108) and serves for the low-loss, sinusoidal signal shaping of the drive signal (110), as well as for filtering out high-frequency components,
wherein the ultrasonic generator (100) is transformer-free on the supply signal side (104), as well as on the transducer side (108),
**characterized by**
a protective capacitor (156) that is connected directly between the lowpass filter (114) and the ultrasonic transducer (108) and serves for filtering direct voltage components out of the lowpass-filtered drive signal, as well as for supplying the filtered drive signal to the ultrasonic transducer (108), wherein the lowpass filter (114) is realized in the form of an LC module consisting of an inductor (142) and a capacitor (144), and in that
two series-connected diodes (216) are provided for limiting the output voltage of the lowpass filter (114) in order to prevent an overload of the power stage (102) due to resonant behavior of the LC module.

2. The ultrasonic generator (100) according to claim 1, wherein the ultrasonic transducer (108) features a safety insulation device, preferably at least one additional electrically insulating body (600, 602), particularly two additional electrically insulating bodies (600, 602), within the ultrasonic transducer (108).

3. The ultrasonic generator (100) according to claim 1 or 2, featuring a power factor correction device (116) that is connected between a device (406, 500) for supplying the electrical supply signal (104) and the power amplifier (102).

4. The ultrasonic generator (100) according to claim 3, wherein the power factor correction device (116) is designed for rectifying and up-converting the electrical supply signal (104).

5. The ultrasonic generator (100) according to claim 3 or 4, featuring an auxiliary voltage supply unit (118) that is connected to the power factor correction device (116) and to the power amplifier (102).

6. The ultrasonic generator (100) according to one of claims 3-5, wherein a thermistor for limiting a charging current of intermediate circuit capacitors and a bridge rectifier are provided in addition to the power factor correction device (116) downstream thereof (116).

7. The ultrasonic generator (100) according to one of claims 1-6, wherein the power amplifier (102) is realized in the form of a digital power output stage, particularly a half-bridge circuit power output stage.

8. The ultrasonic generator (100) according to one of claims 1-7, wherein the pulse generator (106) is designed for generating the pulsed control signal (112) based on a transducer signal (120) applied to the ultrasonic transducer (108) with a frequency that lies within the half width of a resonance curve of the ultrasonic transducer (108), particularly with a frequency that corresponds to the resonant frequency of the ultrasonic transducer (108).

9. The ultrasonic generator (100) according to one of claims 1-8, wherein the pulse generator (106) is designed for generating the pulsed control signal (112), particularly for adjusting a frequency of the pulsed control signal (112), based on a transducer signal (120) applied to the ultrasonic transducer (108) such that a transducer voltage (U) and a transducer current (I) remain or are rendered inphase.

10. The ultrasonic generator (100) according to one of claims 1-9, wherein a transducer current (I), which is required for controlling the mechanical oscillation amplitude of the ultrasonic transducer (108) and for determining a phase relation between the transducer voltage (U) and the transducer current (I), is measured by means of a shunt resistor (170) that is connected between a terminal of the ultrasonic transducer (108) and the ground and delivers a ground-related measuring voltage that is amplified with an amplifier comprising a transistor (226), wherein the amplified current signal is available at the collector of the transistor (226).

11. The ultrasonic generator (100) according to one of claims 1-10, wherein the pulse generator (106) features:
a comparator circuit (122) that defines a pulse width of the pulsed control signal (112) based on a transducer signal (120) applied to the ultrasonic transducer (108);
a voltage-controlled oscillator (124) that defines a frequency of the pulsed control signal (112) based on a transducer signal (120) applied to the ultrasonic transducer (108); and
a modulator (126) that generates the pulsed control signal (112) based on the predefined pulse width and the predefined frequency and supplies this control signal to the power amplifier (102).

12. A handheld device (400), particularly a transformer-free handheld device (400), for fastening a body (402) on a substrate (404) by means of ultrasonic welding, wherein the handheld device (400) features:
a fastening section (408) for temporarily fastening the body (402) on the handheld device (400) during ultrasonic welding; and
an ultrasonic generator (100) according to one of claims 1-11 for generating ultrasound and for acting upon the body (402) fastened on the fastening section (408) with the ultrasound in order to weld the body (402) to the substrate (404) by means the ultrasound.

13. The handheld device (400) according to claim 12, featuring a rechargeable battery (406) in order to supply the electrical supply signal (104).

14. The handheld device (400) according to claim 12 or 13, featuring a power outlet plug (502) for connecting the handheld device (400) to a power outlet (500) in order to supply the electrical supply signal (104).

15. The handheld device (400) according to one of claims 12-14, which is realized in the form of a portable handheld device (400), particularly a cordless handheld device (400).

16. The utilization of a handheld device (400) according to one of claims 12-15 or an ultrasonic generator (100) according to one of claims 1-11 for fastening an anchor (402) on a wood substrate (404) by means of ultrasound-induced melting of the anchor (402) and solidifying the molten anchor (402) after the ultrasound has been switched off.

17. A method for the transformer-free generation of ultrasound by means of an ultrasonic generator (100), particularly for a handheld device (400) for fastening a body (402) on a substrate (404) by means of ultrasonic welding, wherein the method features the steps of:
amplifying an electrical supply signal (104) by means of a power amplifier (102);
generating a pulsed control signal (112) for controlling the power amplifier (102) in a pulsed fashion by means of a pulse generator (106) such that the power amplifier (102) generates an amplified electrical supply signal in the form of a pulsed, digital drive signal for driving an ultrasonic transducer (108);
filtering out high-frequency components and low-loss shaping of a sinusoidal drive signal by means of a lowpass filter (114) that is connected between the power amplifier (102) and the ultrasonic transducer (108);
filtering direct voltage components out of the lowpass-filtered drive signal by means of a protective capacitor (156) that is connected directly between the lowpass filter (114) and the ultrasonic transducer (108), wherein the lowpass filter (114) is realized in the form of an LC module consisting of an inductor (142) and a capacitor (144);
generating the ultrasound by supplying the drive signal (110) filtered by means of the lowpass filter (114) and the protective capacitor (156) to the ultrasonic transducer (108); and
limiting the output voltage of the lowpass filter (114) by means of two series-connected diodes (216) and thereby preventing an overload of the power stage (102) due to resonant behavior of the LC module;
wherein the ultrasonic generator (100) is transformer-free on the supply signal side (104), as well as on the transducer side (108).

## Revendications

1. Générateur d'ultrasons (100) sans transformateur, destiné à créer des ultrasons, notamment pour un instrument portatif (400) destiné à fixer un corps (402) sur un support (404) par soudage aux ultrasons, le générateur d'ultrasons (100) comportant :
un amplificateur de puissance (102) destiné à amplifier un signal d'alimentation (104) électrique ;
un générateur d'impulsions (106) destiné à créer un signal de commande (112) pulsé pour la commande pulsée de l'amplificateur de puissance. (102), de telle sorte que l'amplificateur de puissance (102) créé en tant que signal d'alimentation électrique amplifié un signal d'attaque (110) numérique pulsé, destiné à exciter un transducteur d'ultrasons (108) ;
le transducteur d'ultrasons (108) destiné à créer les ultrasons lors de la mise à disposition du signal d'attaque (110) pour la transducteur d'ultrasons (100) ; et
un filtre passe-bas (114) interconnecté entre l'amplificateur de puissance (102) et le transducteur d'ultrasons (108) pour la conformation de signal sinusoïdal à faible perte du signal d'attaque (110) numérique et pour l'élimination par filtrage de composants à haute fréquence,
le générateur d'ultrasons (100) étant exempt d'un transformateur, aussi bien du côté du signal d'alimentation (104) qu'également du côté du transducteur (108),
**caractérisé par**
un condensateur de protection (156) connecté directement entre le filtre passe-bas (114) et le transducteur d'ultrasons (108) pour l'élimination par filtrage de parts de tension continue hors du signal d'attaque filtré passe-bas et la mise à disposition du signal d'attaque filtré pour le transducteur d'ultrasons (108), le filtre passe-bas (114) en tant que circuit LC étant formé d'une inductance (142) et d'une capacité (144) et par
deux diodes (216) montées en série, qui sont prévues pour limiter la tension de sortie du filtre passe-bas (114) pour empêcher une surcharge de l'étage de puissance (102) par un comportement résonant du circuit LC.

2. Générateur d'ultrasons (100) selon la revendication 1, le transducteur d'ultrasons (108) comportant un système isolant de sécurité, notamment au moins un organe supplémentaire (600, 602) isolant électrique, par ailleurs notamment deux organes supplémentaires (600, 602) isolants électriques à l'intérieur du transducteur d'ultrasons (108).

3. Générateur d'ultrasons (100) selon la revendication 1 ou la revendication 2, comportant un système correcteur (116) du coefficient de puissance, que l'on monte entre un système (406, 500) destiné à mettre à disposition le signal d'alimentation (104) électrique et l'amplificateur de puissance (102).

4. Générateur d'ultrasons (100) selon la revendication 3, le système correcteur (116) du coefficient de puissance étant ménagé pour démoduler et pour élever le signal d'alimentation (104) électrique.

5. Générateur d'ultrasons (100) selon la revendication 3 ou la revendication 4, comportant une unité d'alimentation (118) de tension auxiliaire qui est connectée sur le système correcteur (116) du coefficient de puissance et sur l'amplificateur de puissance (102).

6. Générateur d'ultrasons (100) selon l'une quelconque des revendications 3 à 5, en supplément du système correcteur (116) du coefficient de puissance, à la suite de celui-ci (116) étant prévus un thermistor destiné à limiter un courant de charge de condensateurs de circuits intermédiaires et un redresseur en pont.

7. Générateur d'ultrasons (100) selon l'une quelconque des revendications 1 à 6, l'amplificateur de puissance (102) étant conçu en tant qu'étage de sortie de puissance numérique, notamment en tant qu'étage de sortie de puissance d'un circuit en demi-pont.

8. Générateur d'ultrasons (100) selon l'une quelconque des revendications 1 à 7, le génération d'impulsions (106) étant conçu pour créer, sur la base d'un signal de transducteur (120) appliqué sur le transducteur d'ultrasons (108) le signal de commande (112) pulsé avec une fréquence qui se situe à l'intérieur d'une largeur de valeur moyenne d'une courbe de résonance du transducteur d'ultrasons (108), notamment une fréquence de résonance du transducteur d'ultrasons (108).

9. Générateur d'ultrasons (100) selon l'une quelconque des revendications 1 à 8, le générateur d'impulsions (106) étant conçu pour créer, sur la base d'un signal de transducteur (120) appliqué sur le transducteur d'ultrasons (108) le signal de commande (112) pulsé de telle sorte, notamment pour régler une fréquence du signal de commande (112) pulsé de telle sorte qu'une tension du transducteur (U) et qu'un courant du transducteur (I) restent ou soient amenés en phase.

10. Générateur d'ultrasons (100) selon l'une quelconque des revendications 1 à 9, un courant du transducteur (I) qui est nécessité pour une régulation de l'amplitude d'oscillation mécanique du transducteur d'ultrasons (108) et pour une détermination d'une relation de phase entre la tension du transducteur (U) et le courant du transducteur (I) étant mesuré à l'aide d'une résistance en dérivation (170) qui est interconnectée entre une connexion du transducteur d'ultrasons (108) et la masse et qui fournit une tension de mesure rapportée à la masse qui est amplifiée avec un amplificateur comprenant un transistor (226), le signal de courant amplifié étant à disposition sur le collecteur du transistor (226).

11. Générateur d'ultrasons (100) selon l'une quelconque des revendications 1 à 10, le générateur d'impulsions (106) comportant :
un circuit comparateur (122), qui sur la base d'un signal de transducteur (120) appliqué sur le transducteur d'ultrasons (108) prédéfinit une largeur d'impulsions du signal de commande (112) pulsé ;
un oscillateur (124) asservi en tension, qui sur la base d'un signal de transducteur (120) appliqué sur le transducteur d'ultrasons (108) prédéfinit une fréquence du signal de commande (112) pulsé ;
un modulateur (126), qui sur la base de la largeur d'impulsions prédéfinie et de la fréquence prédéfinie génère le signal de commande (112) pulsé et le met à la disposition de l'amplificateur de puissance (102).

12. Instrument manuel (400), notamment instrument manuel (400) sans transformateur, destiné à fixer un corps (402) sur un support (404) par soudage aux ultrasons, l'instrument manuel (400) comportant :
un segment de fixation (408) pour la fixation provisoire du corps (402) sur l'instrument manuel (400) pendant le soudage aux ultrasons ;
un générateur d'ultrasons (100) selon l'une quelconque des revendications 1 à 11, destiné à créer des ultrasons et à soumettre aux ultrasons le corps (402) fixé sur le segment de fixation (408), pour souder le corps (402) sur le support (404) à l'aide des ultrasons.

13. Instrument manuel (400) selon la revendication 12, comportant un accumulateur (406) destiné à mettre à disposition le signal d'alimentation (104) électrique.

14. Instrument manuel (400) selon la revendication 12 ou la revendication 13, comportant une fiche (502) à prise de courant, destinée à brancher l'instrument manuel (400) sur une prise de courant (500) pour la mise à disposition du signal d'alimentation (104) électrique.

15. Instrument manuel (400) selon l'une quelconque des revendications 12 à 14, conçu en tant qu'instrument manuel (400) portable, notamment en tant qu'instrument manuel (400) fonctionnant sans fil.

16. Utilisation d'un instrument manuel (400) selon l'une quelconque des revendications 12 à 15 ou d'un générateur d'ultrasons (100) selon l'une quelconque des revendications 1 à 11 pour la fixation d'une cheville (402) sur un support en bois (404) par fusion induite par ultrasons de la cheville (402) et par solidification de la cheville (402) fondue après coupure des ultrasons.

17. Procédé destiné à la création sans transformateur d'ultrasons à l'aide d'un générateur d'ultrasons (100), notamment destiné à un instrument manuel (400) pour la fixation d'un corps (402) sur un support (404) par soudage aux ultrasons, le procédé comportant :
l'amplification d'un signal d'alimentation (104) électrique à l'aide d'un amplificateur de puissance (102) ;
la création d'un signal de commande (112) pulsé pour la commande pulsée de l'amplificateur de puissance (102) à l'aide d'un générateur d'impulsions (106) de telle sorte que l'amplificateur de puissance (102) créé en tant que signal d'alimentation électrique amplifié un signal d'attaque numérique pulsé, destiné à exciter un transducteur d'ultrasons (108) ;
l'élimination par filtrage de composants à haute fréquence et conformation à faible perte d'un signal d'attaque sinusoïdal à l'aide d'un filtre passe-bas (114) interconnecté entre l'amplificateur de puissance (102) et le transducteur d'ultrasons (108) ;
l'élimination par filtrage de parts de tension continue hors du signal d'attaque filtré passe-bas à l'aide d'un condensateur de protection (156) interconnecté directement entre le filtre passe-bas (114) et le transducteur d'ultrasons (108), le filtre passe-bas (114) en tant que circuit LC étant formé d'une inductance (142) et d'une capacité (144),
la création des ultrasons par mise à disposition du signal d'attaque (110) filtré à l'aide du filtre passe-bas (114) et du condensateur de protection (156) pour le transducteur d'ultrasons (108) ;
la limitation de la tension de sortie du filtre passe-bas (114) à l'aide de deux diodes (216) connectées en série, pour de ce fait empêcher une surcharge de l'étage de puissance (102) par un comportement résonant du circuit LC ;
le générateur d'ultrasons (100) étant sans transformateur, aussi bien du côté du signal d'alimentation (104) qu'également du côté du transducteur (108).
